# EUROPÄISCHE PATENTSCHRIFT

(11) **EP 4 184 434 B1**
(45) Veröffentlichungstag und Bekanntmachung des Hinweises auf die Patenterteilung: **03.07.2024**
(21) Anmeldenummer: 22203555.2
(22) Anmeldetag: 25.10.2022
(51) Int. Cl.: G06T 7/00, G01N 21/88, G06V 10/774

(54) **VERFAHREN ZUM BEREITSTELLEN VON LERNDATEN FÜR EIN KI-SYSTEM UND VERARBEITUNGSSYSTEM**
METHOD FOR PROVIDING LEARNING DATA FOR AN AI SYSTEM AND PROCESSING SYSTEM
PROCÉDÉ DE FOURNITURE DE DONNÉES D'APPRENTISSAGE POUR UN SYSTÈME IA ET SYSTÈME DE TRAITEMENT

(30) Priorität: 18.11.2021 DE 102021130143
(43) Veröffentlichungstag der Anmeldung: 24.05.2023
(73) Patentinhaber: AUDI AG, 85057 Ingolstadt (DE)
(72) Erfinder: Niehues, Klemens, 80797 München (DE); Rosov, Vladislav, 81671 München (DE); Schniertshauer, Johannes, 86153 Augsburg (DE); Xing, Wenting, 85055 Ingolstadt (DE)

(56) Entgegenhaltungen:
- WO-A1-2020/257811
- WO-A1-2021/225876
- CN-A- 110 288 584
- CN-B- 110 314 854
- US-A1- 2021 233 232
- US-A1- 2021 318 252
- US-B1- 11 150 200
- BIN LIU ET AL: "Automatic detection technology of surface defects on plastic products based on machine vision", MECHANIC AUTOMATION AND CONTROL ENGINEERING (MACE), 2010 INTERNATIONAL CONFERENCE ON, IEEE, PISCATAWAY, NJ, USA, 26. Juni 2010 (2010-06-26), Seiten 2213-2216, XP031723795, ISBN: 978-1-4244-7737-1

## Beschreibung

Die Erfindung betrifft ein Verfahren zum Bereitstellen von Lerndaten für ein KI-System. Des Weiteren betrifft die Erfindung ein Verarbeitungssystem für Werkstücke mit einem KI-System und zumindest einem Sammelbehälter.

Nach Produktionsschritten in einem Verarbeitungssystem beziehungsweise einer Verarbeitungsstraße, wie beispielsweise einer Pressstraße, werden Werkstücke visuell von Mitarbeitern überprüft und auf mögliche Fehler, insbesondere Risse, untersucht. Werden an dem Werkstück Fehler erkannt, werden diese aussortiert. Die fehlerfreien Werkstücke werden dagegen weiteren Produktionsschritten zugeführt. In ihrer Entscheidung werden Mitarbeiter von einem KI-System (System für künstliche Intelligenz), insbesondere einer auf künstlicher Intelligenz basierenden Software-Lösung, unterstützt. Dabei werden die Werkstücke in der Verarbeitungsstraße von speziell dafür vorgesehenen Kameras aufgenommen, worauf das KI-System in den Aufnahmen Risse detektieren kann. Wurde ein Riss von dem KI-System detektiert, bekommt der Mitarbeiter ein entsprechendes visuelles Signal. Da das KI-System in seltenen Fällen Falschdetektionen ausführt beziehungsweise vorhandene Risse nicht erkennt, wird die endgültige Entscheidung über das Vorhandensein der Defekte oftmals vom Mitarbeiter gefällt.

Bei von dem KI-System falsch eingestuften Werkstücken fehlt dem Mitarbeiter oftmals die Möglichkeit, Daten, insbesondere das fehleingestufte Bild des Werkstücks, zur Fehlentscheidung des Systems festzuhalten. Ein aktives Feedback durch den Mitarbeiter, beispielsweise über ein Terminal des Verarbeitungssystems, ist aber zu vermeiden, da dieses zusätzliche Kosten verursacht und den auf die Sichtprüfung fokussierten Mitarbeiter ablenken könnte, wodurch die Gefahr besteht, dass Fehler an den Werkstücken nicht erkannt werden.

Die von dem KI-System fehlinterpretierten Bilder sind jedoch zum Trainieren des KI-System sehr wertvoll, da mit diesen Ausnahmefällen beziehungsweise Kantenfällen ("Edge Cases") das KI-System verbessert werden kann.

Aus der DE 10 2016 108 163 A1 ist ein Verfahren zum Bestimmen einer Qualität eines in einem Umformvorgang umgeformten Bauteils bekannt. Des Weiteren ist eine Vorrichtung zum Bestimmen einer Qualität eines in einem Umformvorgang umgeformten Bauteils bekannt, aufweisend eine Sensorvorrichtung und eine Kontrolleinheit, wobei die Sensorvorrichtung zum Ermitteln von Eigenschaftsdaten am umgeformten Bauteil nach dem Umformvorgang und die Kontrolleinheit zum Auswerten der durch die Sensorvorrichtung ermittelten Eigenschaftsdaten ausgebildet sind.

Weitere bildbasierte Verfahren zum Aussortieren defekter Werkstücke sind bekannt aus der US 11150200 B1 und aus Bin Liu et al.: "Automatic detection technology of surface defects on plastic products based on machine vision", in: 2010 International Conference on Mechanic Automation and Control Engineering (MACE), IEEE, Piscataway, NJ, USA.

Die Aufgabe der Erfindung ist es, eine Bereitstellung von Lerndaten für ein KI-System zu verbessern.

Diese Aufgabe wird durch die unabhängigen Patentansprüche gelöst. Vorteilhafte Weiterbildungen der Erfindung sind in den abhängigen Patentansprüchen, der folgenden Beschreibung sowie den Figuren offenbart. Durch die Erfindung ist ein Verfahren zum Bereitstellen von Lerndaten für ein KI-System bereitgestellt. Das Verfahren umfasst als Schritte ein Aufnehmen von Bildern von bearbeiteten Werkstücken durch eine Bildaufnahmevorrichtung des KI-Systems, ein Klassifizieren der aufgenommenen Bilder durch das KI-System mittels eines Klassifikationskriteriums, wobei durch das Klassifizieren der aufgenommenen Bilder ermittelt wird, ob die jeweiligen Werkstücke fehlerfrei oder fehlerbehaftet sind, und ein Bereitstellen einer Qualitätsinformation des Werkstücks, wobei in Abhängigkeit von der Qualitätsinformation festgelegt wird, ob das jeweilige Werkstück fehlerfrei oder fehlerbehaftet ist, wobei fehlerhafte Werkstücke in einem Sammelbehälter aussortiert werden. Des Weiteren umfasst das Verfahren ein Erfassen durch eine Sensorvorrichtung des Sammelbehälters, falls ein jeweiliges Werkstück in den Sammelbehälter aussortiert wird, wobei durch das Erfassen der aussortierten Werkstücke durch die Sensorvorrichtung das aussortierte Werkstück zu dem dazugehörigen Bild zugeordnet wird, und wobei das zugehörige Bild mit einer digitalen Aussortierungsmarkierung markiert wird, wobei die Aussortierungsmarkierung in Abhängigkeit von der Klassifizierung durch das KI-System bereitgestellt wird, und ein Bereitstellen der mit der Aussortierungsmarkierung markierten Bilder als Lerndaten für das KI-System.

Mit anderen Worten können Werkstücke, die bearbeitet wurden, zum Beispiel Tiefziehbauteile in einer Pressstraße, durch eine Bildaufnahmevorrichtung eines Systems für künstliche Intelligenz beziehungsweise KI-Systems aufgenommen werden, wobei das Aufnehmen insbesondere ein sequentielles Aufnehmen umfasst. Die Bildaufnahmevorrichtung kann eine oder mehrere Kameras aufweisen, die das Werkstück erfassen. Alternativ oder zusätzlich zu der Bildaufnahmevorrichtung können auch weitere Sensoren das jeweilige Werkstück aufnehmen, zum Beispiel (Ultra-)Schallsensoren oder ein Lidar. Die so aufgenommenen Bilder können durch das KI-System, das insbesondere einen Bildanalysealgorithmus umfassen kann, klassifiziert werden, indem die Bilder auf Vorliegen eines Klassifikationskriteriums überprüft werden. Durch das Klassifikationskriterium kann beispielsweise vorgegeben sein, welche Eigenschaften in den Bildern als Fehler oder als fehlerfrei erkannt werden. Beispielsweise können Risse und/oder Dellen und/oder Kratzer in dem Werkstück als Fehler erkannt werden. Das KI-System kann beispielsweise zuvor mit Lerndaten angelernt sein, so dass das angelernte KI-System die aufgenommenen Bilder klassifizieren kann.

Anschließend kann mittels einer Qualitätsinformation, die insbesondere vorgegeben sein kann, ermittelt werden, ob das klassifizierte Werkstück fehlerfrei oder fehlerbehaftet ist. Die Qualitätsinformation kann hierbei einen Ist-Zustand des Werkstücks darstellen, wobei die Qualitätsinformation beispielsweise aus einer manuellen beziehungsweise visuellen Überprüfung durch einen Mitarbeiter und/oder dem KI-System und/oder einem weiteren technischen Überwachungssystem stammen kann. Mit anderen Worten kann die Qualitätsinformation eine Entscheidung aus einer visuelle Endkontrolle durch einen Mitarbeiter sein, ob das Werkstück fehlerfrei oder fehlerbehaftet ist. Vorzugsweise kann die Ermittlung der Qualitätsinformation durch das zuvor durchgeführte Klassifizieren der aufgenommenen Bilder unterstützt werden, wobei beispielsweise ein Signal bereitgestellt wird, falls das jeweilige Werkstück als fehlerbehaftet klassifiziert wird. Vorzugsweise dient das Klassifizieren jedoch nur zur Unterstützung und die endgültige Entscheidung, ob das Werkstück fehlerfrei oder fehlerbehaftet ist, ist abhängig von der bereitgestellten Qualitätsinformation. Wird anhand der Qualitätsinformation festgestellt, dass das jeweilige Werkstück fehlerbehaftet ist, kann das fehlerbehaftete Werkstück in einen Sammelbehälter beziehungsweise Schrottbehälter aussortiert werden.

Der Sammelbehälter weist eine Sensorvorrichtung auf, die detektieren kann, wenn ein neues Werkstück in den Sammelbehälter aussortiert wird. Hierbei kann die Sensorvorrichtung beispielsweise einen optischen und/oder mechanischen und/oder resistiven und/oder kapazitiven Sensor aufweisen, wie beispielsweise eine Kamera, eine Lichtschranke, eine Waage, einen Dehnungsmessstreifen und/oder einen Drucksensor. Erkennt die Sensorvorrichtung ein neues Werkstück, das aussortiert wurde, kann diese ein Signal an das KI-System senden, wobei dann durch das KI-System das zu dem aussortierten Werkstück gehörige Bild zugeordnet wird. Hierfür kann beispielsweise ein Zeitstempel erzeugt werden, der angibt, wann das jeweilige Werkstück aussortiert wurde. Zusätzlich kann das dazugehörige Bild mit einer Aussortierungsmarkierung markiert werden, die die von dem KI-System ermittelte Klassifikation umfasst. Somit kann die Aussortierungsmarkierung also zumindest zwei Informationen aufweisen, eine Information von der Klassifikation und die andere Information, ob das Werkstück aussortiert wurde oder nicht.

Schließlich können die so markierten Bilder als Lerndaten für das KI-System bereitgestellt werden, wobei die Bilder durch die Aussortierungsmarkierung schnell in bestimmte Sonderfälle unterteilt werden können. Zum Beispiel in einen richtig-positiven Fall, in dem das KI-System Risse detektiert und das Werkstück aussortiert wurde und/oder in einen falsch-negativen Fall, in dem das KI-System keine Risse detektiert, das Werkstück jedoch trotzdem aussortiert wurde. Insbesondere der letztgenannte Fall ist für das Anlernen des KI-Systems besonders wertvoll, da somit Sonderfälle von einer Falschdetektion verbessert gesammelt werden können, ohne dass ein Mitarbeiter diese zusätzlich markieren muss.

Durch die Erfindung ergibt sich der Vorteil, dass einerseits Werkstücke zu den dazugehörigen Bilder leichter zugeordnet werden können, beispielsweise um die Werkstücke nochmals zu überprüfen und andererseits können Klassifikationsfälle, insbesondere Falschdetektionen des KI-Systems leichter aufgeteilt und für ein spezielles Anlernen der Sonderfälle beziehungsweise Kantenfälle verwendet werden, ohne einen Ablauf im Produktionsprozess zu stören. Insbesondere kann das Verfahren während eines laufenden Betriebs in der Produktion durchgeführt werden, da keine zusätzlichen Schritte durch Mitarbeiter notwendig sind, wodurch eine größere Anzahl von Lerndaten für das KI-System erzeugt werden können. Mittels der Lerndaten kann somit die Zuverlässigkeit des KI-Systems erhöht werden.

Die Erfindung umfasst auch Ausführungsformen, durch die sich zusätzliche Vorteile ergeben.

Eine Ausführungsform sieht vor, dass Bilder von Werkstücken, die durch das KI-System als fehlerfrei klassifiziert werden, und bei denen zusätzlich das dazugehörige Werkstück durch die Sensorvorrichtung des Sammelbehälters als aussortiert erfasst wird, als fehleingestuft markiert werden. Mit anderen Worten ist vorgesehen, dass falsch-negative Fälle, in denen das KI-System keine Risse detektiert, das Werkstück jedoch trotzdem aussortiert wird, gesondert markiert werden, insbesondere als fehleingestuft beziehungsweise als falsch-negativ. Vorzugsweise kann die bereitgestellte Qualitätsinformation in diesem Fall anzeigen, dass das Werkstück fehlerbehaftet ist, was nicht durch das KI-System erkannt wurde. Durch diese Ausführungsform ergibt sich der Vorteil, dass ein für die Lerndaten wertvoller Sonderfall für die Klassifikation, bei der das KI-System das Bild fehleinstuft, gesondert markiert und/oder gespeichert werden kann, um das KI-System anschließend mit diesen Lerndaten anzulernen.

Eine weitere Ausführungsform sieht vor, dass Bilder von Werkstücken, die durch das KI-System als fehlerbehaftet klassifiziert werden, und bei denen das dazugehörige Werkstück nicht aussortiert wird, als fehleingestuft markiert werden. Mit anderen Worten können die Bilder von Werkstücken, bei denen das KI-System einen Fehler detektiert aber die Werkstücke nicht aussortiert werden, als Sonderfall markiert werden. Insbesondere können diese Bilder als falsch-positiv gekennzeichnet werden. Dass das dazugehörige Werkstück nicht aussortiert wird, kann beispielsweise durch ein Erkennen, dass das Werkstück weiterverarbeitet wird, bereitgestellt werden.

Vorzugsweise ist vorgesehen, dass nicht aussortierte Werkstücke erkannt werden, indem nach einer Klassifikation des jeweiligen Bildes durch das KI-System als fehlerbehaftetes Werkstück für eine vorgegebene Zeit abgewartet wird, dass die Sensorvorrichtung des Sammelbehälters das dazugehörige Werkstück erfasst, wobei das jeweilige Bild als fehleingestuft markiert wird, falls die Sensorvorrichtung kein Werkstück innerhalb der vorgegebenen Zeit erfasst. Mit anderen Worten kann ein falsch-positiver Fall, bei dem das KI-System Risse detektiert, aber das Werkstück nicht aussortiert wird, automatisiert erkannt werden, indem nach der Klassifizierung, dass das Werkstück fehlerhaft ist, für eine vorgegebene Zeit auf das Signal der Sensorvorrichtung gewartet wird, dass ein neues Bauteil in den Sammelbehälter aussortiert wird. Erfolgt dieses Signal nicht innerhalb der vorgegebenen Zeit, stellt das System fest, dass das Werkstück nicht aussortiert wurde und kann somit das Bild des entsprechenden Werkstücks markieren, insbesondere als fehleingestuft, wobei auch diese fehleingestuften falsch-positiven Bilder als Lerndaten bereitgestellt werden können. Die Zeit, die abgewartet wird, kann aus Erfahrungswerten und/oder einer Bearbeitungsgeschwindigkeit von sequentiell bearbeiteten Werkstücken vorgegeben sein. Hierdurch ergibt sich der Vorteil, dass ein weiterer wichtiger Sonderfall aus den Bildern herausgefiltert und als Lerndaten bereitgestellt werden kann.

Eine weitere Ausführungsform sieht vor, dass das KI-System mit den bereitgestellten Lerndaten, insbesondere mit den als fehleingestuft markierten Bildern, angelernt wird. Insbesondere können die als fehleingestuften Bilder, die Sonderfälle darstellen, wie zum Beispiel der falsch-positive und/oder der falsch-negativen Fall, zum Anlernen verwendet werden. Somit kann das KI-System kontinuierlich und auf zuverlässige Weise verbessert werden.

Eine weitere Ausführungsform sieht vor, dass bei dem Erfassen der jeweilig aussortierten Werkstücke ein jeweiliger Zeitstempel erzeugt wird, mittels dem die Zuordnung des aussortierten Werkstücks zu dem dazugehörigen Bild durchgeführt wird. So kann die Sensorvorrichtung des Sammelbehälters einen Zeitstempel erzeugen, der an das KI-System übermittelt wird und somit zu dem entsprechenden Bild des aussortierten Werkstücks. Mit dem Zeitstempel kann auch das Werkstück zu einem späteren Zeitpunkt für eine Nachkontrolle wiedergefunden werden, wobei vorzugsweise vorgegeben ist, in welchen Zeitabschnitten der Sammelbehälter Werkstücke aufgenommen hat. Durch diese Ausführungsform kann eine bevorzugte Umsetzung des Verfahrens erreicht werden.

Eine weitere Ausführungsform sieht vor, dass die Sensorvorrichtung des Sammelbehälters eine Lichtschranke und/oder eine Waage und/oder eine Kamera umfasst. Durch diese Ausführungsform kann eine weitere bevorzugte Umsetzungsform des Verfahrens erreicht werden.

Vorzugsweise ist vorgesehen, dass die Werkstücke Tiefziehbauteile, insbesondere für eine Kraftfahrzeuganwendung, sind, und vor der Aufnahme der Bilder durch die Bildaufnahmevorrichtung ein Tiefziehen der Tiefziehbauteile durchgeführt wird. Mit anderen Worten kann das Verfahren bevorzugt für Tiefziehbauteile angewendet werden, die durch eine Pressvorrichtung gepresst beziehungsweise tiefgezogen werden. Das kann insbesondere für eine Kraftfahrzeuganwendung durchgeführt werden, wobei die Tiefziehbauteile als Karosseriebauteile verwendet werden können. Insbesondere beim Tiefziehen können Fehler in den Tiefziehbauteilen entstehen, beispielsweise Risse, die durch das KI-System erkannt werden sollen, so dass die fehlerbehafteten Tiefziehbauteile aussortiert werden können. Durch diese Ausführungsform ergibt sich eine bevorzugte Anwendungsform für das Verfahren.

In einer vorteilhaften Ausführungsform ist vorgesehen, dass das Werkstück mittels des Klassifikationskriteriums auf Risse überprüft wird. Mit anderen Worten kann das KI-System Risse in dem Werkstück erkennen und das Werkstück somit als fehlerfrei oder fehlerbehaftet einordnen. Hierbei kann das Werkstück vorzugsweise ein zuvor genanntes Tiefziehbauteil sein, bei dem Risse durch das Tiefziehen auftreten können.

Ein weiterer Aspekt der Erfindung betrifft ein Verarbeitungssystem für Werkstücke, mit einem KI-System und zumindest einem Sammelbehälter, wobei das Verarbeitungssystem dazu ausgebildet sein kann, ein Verfahren nach einem der vorhergehenden Ausführungsformen durchzuführen. Insbesondere ist das Verarbeitungssystem zum Verarbeiten der Werkstücke in einem Verarbeitungsschritt ausgebildet, wobei das KI-System zum Aufnehmen von Bildern der Werkstücke durch eine Bildaufnahmevorrichtung und zum Klassifizieren der aufgenommenen Bilder, ob die jeweiligen Werkstücke fehlerfrei oder fehlerbehaftet sind, mittels eines Klassifikationskriteriums ausgebildet ist. Das Verarbeitungssystem ist ferner dazu ausgebildet, die jeweiligen Werkstücke in Abhängigkeit von einer bereitgestellten Qualitätsinformation in den Sammelbehälter auszusortieren, wobei der Sammelbehälter zum Erfassen aussortierter Werkstücke durch eine Sensorvorrichtung ausgebildet ist. Das KI-System ist zusätzlich dazu ausgebildet, bei Erfassen eines jeweiligen Werkstücks durch die Sensorvorrichtung des Sammelbehälters das aussortierte Werkstück zu dem dazugehörigen Bild zuzuordnen, und das dazugehörige Bild mit einer Aussortierungsmarkierung zu markieren, wobei die Aussortierungsmarkierung in Abhängigkeit von der Klassifizierung durch das KI-System bereitgestellt ist, wobei vorzugsweise die Aussortierungsmarkierung und die Klassifizierung in Bezug gesetzt werden können. Schließlich kann das mit der Aussortierungsmarkierung markierte Bild als Lerndaten bereitgestellt werden. Hierbei ergeben sich gleiche Vorteile und Variationsmöglichkeiten wie bei dem erfindungsgemäßen Verfahren.

Zu der Erfindung gehört auch eine Steuervorrichtung für das Verarbeitungssystem. Die Steuervorrichtung kann eine Datenverarbeitungsvorrichtung oder eine Prozessoreinrichtung aufweisen, die dazu eingerichtet ist, eine Ausführungsform des erfindungsgemäßen Verfahrens durchzuführen. Die Prozessoreinrichtung kann hierzu zumindest einen Mikroprozessor und/oder zumindest einen Mikrocontroller und/oder zumindest einen FPGA (Field Programmable Gate Array) und/oder zumindest einen DSP (Digital Signal Processor) aufweisen. Des Weiteren kann die Prozessoreinrichtung Programmcode aufweisen, der dazu eingerichtet ist, bei Ausführen durch die Prozessoreinrichtung die Ausführungsform des erfindungsgemäßen Verfahrens durchzuführen. Der Programmcode kann in einem Datenspeicher der Prozessoreinrichtung gespeichert sein.

Vorzugsweise kann das erfindungsgemäße Verfahren zum Bereitstellen von Lerndaten auch ganz oder teilweise in einer Rechnerwolke (Cloud) durchgeführt werden. Dabei können die Daten der aufgenommenen Werkstücke in die Rechnerwolke übermittelt und dort verarbeitet werden. Alternativ können die Daten der aufgenommenen Werkstücke teilweise in der Rechnerwolke und zum anderen Teil auf der lokalen Steuervorrichtung vorverarbeitet/verarbeitet werden.

Zu der Erfindung gehören auch Weiterbildungen des erfindungsgemäßen Verarbeitungssystems, die Merkmale aufweisen, wie sie bereits im Zusammenhang mit den Weiterbildungen des erfindungsgemäßen Verfahrens beschrieben worden sind. Aus diesem Grund sind die entsprechenden Weiterbildungen des erfindungsgemäßen Verarbeitungssystems hier nicht noch einmal beschrieben.

Die Erfindung umfasst auch die Kombinationen der Merkmale der beschriebenen Ausführungsformen. Die Erfindung umfasst also auch Realisierungen, die jeweils eine Kombination der Merkmale mehrerer der beschriebenen Ausführungsformen aufweisen, sofern die Ausführungsformen nicht als sich gegenseitig ausschließend beschrieben wurden.

Im Folgenden sind Ausführungsbeispiele der Erfindung beschrieben. Hierzu zeigt:
- Fig. 1: ein schematisch dargestelltes Verarbeitungssystem gemäß einer beispielhaften Ausführungsform;
- Fig. 2: ein schematisches Verfahrensdiagramm gemäß einer beispielhaften Ausführungsform.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

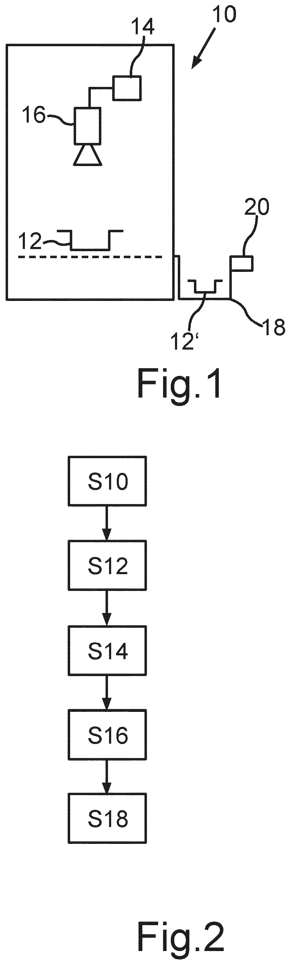

In Fig. 1 ist ein schematisch dargestelltes Verarbeitungssystem 10 für Werkstücke 12 dargestellt, wobei die Werkstücke 12 in diesem Beispiel Tiefziehbauteile sein können, die durch einen Tiefziehprozess, insbesondere für eine Kraftfahrzeuganwendung, hergestellt werden. Hierbei kann das Verarbeitungssystem 10 beispielsweise eine Pressstraße sein, die die Werkstücke 12 nach dem Pressvorgang zur Klassifikation durch ein KI-System 14 bereitstellt.

Das KI-System 14 kann zumindest eine Bildaufnahmevorrichtung 16 aufweisen, die ein oder mehrere Kameras umfasst, um das bearbeitete Werkstück 12 aufzunehmen und dem KI-System 14 Bilder des Werkstücks 12 bereitzustellen. Das KI-System 14 kann ein maschinell angelernter Algorithmus für künstliche Intelligenz sein, insbesondere ein neuronales Netz, das die aufgenommenen Bilder auswerten und gemäß einem Klassifikationskriterium überprüfen kann. Das Klassifikationskriterium kann beispielsweise sein, ob in dem bearbeiteten Werkstück 12 Fehler erkannt werden oder nicht. Die Fehler können insbesondere Risse sein, die bei dem Tiefziehen in dem Werkstück 12 entstehen können. Die Klassifikation durch das KI-System 14 wird vorzugsweise dafür verwendet, einen Benutzer zu unterstützen und beispielsweise ein Signal zu erzeugen, falls das jeweilige Werkstück 12 als fehlerbehaftet klassifiziert wird, was bedeutet, dass ein Riss in dem Werkstück 12 entdeckt wird.

Jedoch kann es vorkommen, dass das KI-System 14 das Werkstück 12 fehlerhaft klassifiziert und beispielsweise einen Riss nicht erkennt oder fehlerhaft annimmt. Daher kann vorgesehen sein, dass eine letztendliche Entscheidung, ob das Werkstück 12 fehlerbehaftet ist oder nicht, durch eine abschließende Qualitätskontrolle entschieden wird und das Klassifizieren der aufgenommenen Bilder durch das KI-System 14 nur zur Unterstützung dient. Das Ergebnis der Qualitätskontrolle kann dem Verarbeitungssystem 10 als Qualitätsinformation bereitgestellt werden, wobei die Qualitätsinformation im einfachsten Fall ein Steuersignal darstellt, dass das Werkstück 12 weiteren Verarbeitungsschritten zuführt oder aussortiert.

Um Sonderfälle beziehungsweise Falschdetektionen des KI-Systems 14, insbesondere falsch-positive und falsch-negative Fälle, herauszufiltern und für ein nachträgliches Antrainieren des KI-Systems 14 zu verwenden, kann ein Sammelbehälter 18 bereitgestellt sein, in den fehlerbehaftete Werkstücke 12' aussortiert werden. Um festzustellen, dass ein Werkstück 12' aussortiert wurde, kann der Sammelbehälter 18 eine Sensorvorrichtung 20 aufweisen, die erkennen kann, wenn ein neues Werkstück aussortiert wird. Die Sensorvorrichtung 20 kann beispielsweise als Lichtschranke ausgebildet sein. Alternativ oder zusätzlich kann die Sensorvorrichtung 20 auch als Kamera und/oder Waage ausgebildet sein.

Wird das Aussortieren eines Werkstücks 12' durch die Sensorvorrichtung 20 erkannt, kann die Sensorvorrichtung 20 ein Signal an das KI-System 14 senden, wobei das Signal insbesondere einen Zeitstempel aufweisen kann, und wobei mittels des Signals das aussortierte Werkstück 12' mit dem durch die Bildaufnahmevorrichtung 16 aufgenommenen Bild verknüpft werden kann. Des Weiteren kann das Bild mit einer Aussortierungsmarkierung markiert werden, wobei die Aussortierungsmarkierung in Abhängigkeit von der zuvor durchgeführten Klassifizierung durch das KI-System 14 erstellt wird.

Beispielsweise kann, falls das KI-System 14 einen Riss erkennt und das Werkstück aussortiert wird, das Bild als richtig-positiv markiert werden, was bedeutet, dass das KI-System 14 den Riss richtig erkannt hat. Als weiterer Fall kann das KI-System 14 beispielsweise keinen Riss detektieren, aber die Sensorvorrichtung 20 erkennt das Aussortieren in den Sammelbehälter 18. Hierbei kann das Bild als falsch-negativ markiert werden und somit als durch das KI-System 14 fehleingestuft. Dieser Fall bietet einen wertvollen Sonderfall für das nachträgliche Anlernen des KI-Systems 14. Des Weiteren kann auch der Fall eintreten, dass das KI-System 14 einen Riss im Werkstück 12 erkennt, wobei das Werkstück 12 nicht im Sammelbehälter 18 aussortiert wird. Auch in diesem Fall kann das entsprechende Bild als fehleingestuft markiert werden, insbesondere als falsch-positiv, was einem weiteren Sonderfall und bevorzugte Lerndaten für das KI-System 14 darstellt.

Um den falsch-positiven Fall automatisiert zu erfassen, kann vorzugsweise vorgesehen sein, dass nach einer Detektion eines Risses durch das KI-System 14 für eine vorgegebene Zeit durch die Sensorvorrichtung 20 abgewartet wird, dass das Werkstück in den Sammelbehälter 18 aussortiert wird, wobei das dazugehörige Bild als falsch-positiv markiert wird, falls das Werkstück nicht durch die Sensorvorrichtung 20 erkannt wird.

Somit können insbesondere fehleingestufte Bilder fallweise gruppiert werden, womit das KI-System 14 verbessert nachtrainiert werden kann. Somit kann kontinuierlich das KI-System 14 verbessert werden, ohne einen zusätzlichen Aufwand durch Benutzer, insbesondere einen manuellen Aufwand durch Eingabe von Markierungen in den jeweiligen Bildern zu erhalten.

In Fig. 2 ist ein schematisches Verfahrensdiagramm für ein Verfahren zum Bereitstellen von Lerndaten für ein KI-System 14 dargestellt. In einem Schritt S10 können Bilder von bearbeiteten Werkstücken 12 durch eine Bildaufnahmevorrichtung 16 eines KI-Systems 14 aufgenommen werden. In einem Schritt S12 können die aufgenommenen Bilder durch das KI-System 14 mittels eines Klassifikationskriteriums klassifiziert werden, wobei durch das Klassifizieren der aufgenommenen Bilder ermittelt wird, ob die jeweiligen Werkstücke 12 fehlerfrei oder fehlerbehaftet sind.

In einem Schritt S14 kann eine Qualitätsinformation des Werkstücks bereitgestellt werden, die einen nachprüfbaren Ist-Zustand darstellt, wobei in Abhängigkeit von der Qualitätsinformation festgelegt wird, ob das jeweilige Werkstück 12 fehlerfrei oder fehlerbehaftet ist, wobei fehlerhafte Werkstücke 12 in einen Sammelbehälter 18 aussortiert werden. In einem Schritt S16 kann durch eine Sensorvorrichtung 20 des Sammelbehälters 18 erfasst werden, wenn ein neues Werkstück 12' in den Sammelbehälter gelangt.

Hierbei kann nach dem Erfassen des aussortierten Werkstücks 12' durch die Sensorvorrichtung 20 eine Zuordnung zu dem entsprechenden Bild ermittelt werden, wobei das ermittelte Bild zusätzlich mit einer Aussortierungsmarkierung markiert wird, die von der zuvor durchgeführten Klassifizierung durch das KI-System 14 abhängig ist. Das bedeutet, dass die Aussortierungsmarkierung eine Information umfassen kann, wie das jeweilige Bild klassifiziert wurde und zusätzlich, ob das dazugehörige Werkstück aussortiert wurde oder nicht.

Schließlich können in einem Schritt S18 die markierten Bilder als Lerndaten für das KI-System 14 bereitgestellt werden. Mit anderen Worten kann das KI-System 14 mit den Lerndaten, die die mit der Aussortierungsmarkierung markierten Bilder umfassen, angelernt werden, wobei vorzugsweise Sonderfälle zum Anlernen verwendet werden.

In einem weiteren beispielhaften Aspekt ist vorgesehen, dass eine Aussortierung der schadhaften Werkstücke technisch überwacht wird. Dazu sind Sammelbehälter 18 beziehungsweise Schrottbehälter mit einer Sensorvorrichtung 20 ausgestattet. Die Sensorvorrichtung 20 kann eine Waage, eine Lichtschranke und/oder eine Kamera umfassen. Mit Hilfe der Sensorvorrichtung 20 kann überprüft werden, ob ein neues Werkstück 12' im Sammelbehälter 18 abgelegt wird. Im Falle einer Detektion eines neuen Werkstücks 12' kann ein neuer Zeitstempel inklusive Markierung (Aussortierungsmarkierung), ob es sich um ein potentielles falsch-positives oder falsch-negatives Werkstück 12' handelt, in eine Datenbank übermittelt und anschließend den gespeicherten Bildern zugeordnet werden. Die Bilder können dann einem Labeling-Prozess und anschließend einem Trainingsprozess für das KI-System 14 zugeführt werden.

Insgesamt zeigen die Beispiele, wie durch die Erfindung ein aktives Lernen basierend auf einem passiven Mitarbeiter-Feedback erreicht werden kann.

## Patentansprüche

1. Verfahren zum Bereitstellen von Lerndaten für ein KI-System (14), umfassend die Schritte:
- Aufnehmen (10) von Bildern von bearbeiteten Werkstücken (12) durch eine Bildaufnahmevorrichtung (16) des KI-Systems (14);
- Klassifizieren (S12) der aufgenommenen Bilder durch das KI-System (14) mittels eines Klassifikationskriteriums, wobei durch das Klassifizieren der aufgenommenen Bilder ermittelt wird, ob die jeweiligen Werkstücke (12) fehlerfrei oder fehlerbehaftet sind;
- Bereitstellen (S14) einer Qualitätsinformation des Werkstücks (12), wobei in Abhängigkeit von der Qualitätsinformation festgelegt wird, ob das jeweilige Werkstück (12) fehlerfrei oder fehlerbehaftet ist, wobei fehlerhafte Werkstücke (12) in einen Sammelbehälter (18) aussortiert werden;
- Erfassen (S16) durch eine Sensorvorrichtung (20) des Sammelbehälters (18), falls ein jeweiliges Werkstück (12) in den Sammelbehälter (18) aussortiert wird, wobei durch das Erfassen der aussortierten Werkstücke (12') durch die Sensorvorrichtung (20) das aussortierte Werkstück (12') zu dem dazugehörigen Bild zugeordnet wird, und wobei das dazugehörige Bild mit einer Aussortierungsmarkierung markiert wird, wobei die Aussortierungsmarkierung in Abhängigkeit von der Klassifizierung durch das KI-System (14) bereitgestellt wird;
- Bereitstellen (S18) der mit der Aussortierungsmarkierung markierten Bilder als Lerndaten für das KI-System (14).

2. Verfahren nach Anspruch 1, wobei Bilder von Werkstücken (12), die durch das KI-System (14) als fehlerfrei klassifiziert werden, und bei denen zusätzlich das dazugehörige Werkstück durch die Sensorvorrichtung (20) des Sammelbehälters (18) als aussortiert erfasst wird, als fehleingestuft markiert werden.

3. Verfahren nach einem der vorhergehenden Ansprüche, wobei Bilder von Werkstücken (12), die durch das KI-System (14) als fehlerbehaftet klassifiziert werden, und bei denen das dazugehörige Werkstück nicht aussortiert wird, als fehleingestuft markiert werden.

4. Verfahren nach Anspruch 3, wobei nicht aussortierte Werkstücke erkannt werden, indem nach einer Klassifikation des jeweiligen Bildes durch das KI-System (14) als fehlerbehaftetes Werkstück für eine vorgegebene Zeit abgewartet wird, dass die Sensorvorrichtung (20) des Sammelbehälters (18) das dazugehörige Werkstück (12) erfasst, wobei das jeweilige Bild als fehleingestuft markiert wird, falls die Sensorvorrichtung (20) kein Werkstück innerhalb der vorgegebenen Zeit erfasst.

5. Verfahren nach einem der vorhergehenden Ansprüche, wobei das KI-System (14) mit den bereitgestellten Lerndaten, insbesondere mit den als fehleingestuft markierten Bildern, angelernt wird.

6. Verfahren nach einem der vorhergehenden Ansprüche, wobei bei dem Erfassen der jeweilig aussortierten Werkstücke (12') ein jeweiliger Zeitstempel erzeugt wird, mittels dem die Zuordnung des aussortierten Werkstücks (12') zu dem dazugehörigen Bild durchgeführt wird.

7. Verfahren nach einem der vorhergehenden Ansprüche, wobei die Sensorvorrichtung (20) des Sammelbehälters (18) eine Lichtschranke und/oder eine Waage und/oder eine Kamera umfasst.

8. Verfahren nach einem der vorhergehenden Ansprüche, wobei die Werkstücke (12) Tiefziehbauteile, insbesondere für eine Kraftfahrzeuganwendung, sind und vor der Aufnahme der Bilder durch die Bildaufnahmevorrichtung (16) ein Tiefziehen der Tiefziehbauteile durchgeführt wird.

9. Verfahren nach einem der vorhergehenden Ansprüche, wobei das Werkstück (12) mittels des Klassifikationskriteriums auf Risse überprüft wird.

10. Verarbeitungssystem (10) für Werkstücke (12) mit einem KI-System (14) und zumindest einem Sammelbehälter (18), wobei das Verarbeitungssystem (10) zum Verarbeiten der Werkstücke (12) in einem Verarbeitungsschritt ausgebildet ist, wobei das KI-System (14) zum Aufnehmen von Bildern der Werkstücke (12) durch eine Bildaufnahmevorrichtung (16) und zum Klassifizieren der aufgenommenen Bilder, ob die jeweiligen Werkstücke (12) fehlerfrei oder fehlerbehaftet sind, mittels eines Klassifikationskriteriums ausgebildet ist, wobei das Verarbeitungssystem (10) ferner dazu ausgebildet ist, die jeweiligen Werkstücke (12) in Abhängigkeit von einer bereitgestellten Qualitätsinformation in den Sammelbehälter (18) auszusortieren, wobei der Sammelbehälter (18) zum Erfassen aussortierter Werkstücke (12') durch eine Sensorvorrichtung (0) ausgebildet ist, und wobei das KI-System (14) zusätzlich dazu ausgebildet ist, bei Erfassen eines jeweiligen Werkstücks (12') durch die Sensorvorrichtung (20) des Sammelbehälters (18) das aussortierte Werkstück (12') zu dem dazugehörigen Bild zuzuordnen, das dazugehörige Bild mit einer Aussortierungsmarkierung zu markieren, wobei die Aussortierungsmarkierung in Abhängigkeit von der Klassifizierung durch das KI-System (14) bereitgestellt ist, und das mit der Aussortierungsmarkierung markierte Bild als Lerndaten bereitzustellen.

## Claims

1. A method for providing learning data for an AI system (14) comprising the steps of:
- capturing (10) images of machined workpieces (12) by an image capturing device (16) of the AI system (14);
- classifying (S12) the captured images by the AI system (14) by means of a classification criterion, wherein the classification of the captured images determines whether the respective workpieces (12) are defect-free or defective;
- providing (S14) a quality information of the workpiece (12), wherein it is determined as a function of the quality information whether the respective workpiece (12) is defect-free or defective, wherein defective workpieces (12) are sorted out into a collecting container (18);
- detecting (S16) by a sensor device (20) of the collecting container (18) if a respective workpiece (12) is sorted out into the collecting container (18), wherein by detecting the sorted-out workpieces (12') by the sensor device (20), the sorted-out workpiece (12') is associated with the associated image, and wherein the associated image is marked with a sorting-out mark, wherein the sorting-out mark is provided by the AI system (14) as a function of the classification;
- providing (S18) the images marked with the sorting-out mark as learning data for the AI system (14).

2. The method according to claim 1, wherein images of workpieces (12) which are classified as defect-free by the AI system (14), and in which additionally the associated workpiece is detected as sorted out by the sensor device (20) of the collecting container (18), are marked as misclassified.

3. The method according to any one of the preceding claims, wherein images of workpieces (12) which are classified as defective by the AI system (14) and in which the associated workpiece is not sorted out are marked as misclassified.

4. The method according to claim 3, wherein workpieces which have not been sorted out are recognized in that, after a classification of the respective image by the AI system (14) as a defective workpiece, it is waited for a predetermined time for the sensor device (20) of the collecting container (18) to detect the associated workpiece (12), wherein the respective image is marked as misclassified if the sensor device (20) does not detect any workpiece within the predetermined time.

5. The method according to any one of the preceding claims, wherein the AI system (14) is taught with the learning data provided, in particular with the images marked as misclassified.

6. The method according to any one of the preceding claims, wherein a respective time stamp is generated during the detection of the respective sorted-out workpieces (12'), by means of which the assignment of the sorted-out workpiece (12') to the associated image is carried out.

7. The method according to any one of the preceding claims, wherein the sensor device (20) of the collecting container (18) comprises a light barrier and/or a scale and/or a camera.

8. The method according to any one of the preceding claims, wherein the workpieces (12) are deep-drawn components, in particular for a motor vehicle application, and a deep-drawing of the deep-drawn components is performed before the images are captured by the image capturing device (16).

9. The method according to any one of the preceding claims, wherein the workpiece (12) is checked for cracks by means of the classification criterion.

10. A processing system (10) for workpieces (12) having an AI system (14) and at least one collecting container (18), wherein the processing system (10) is designed to process the workpieces (12) in a processing step, wherein the AI system (14) is designed to capture images of the workpieces (12) by means of an image capturing device (16) and to classify the captured images, whether the respective workpieces (12) are defect-free or defective, by means of a classification criterion, wherein the processing system (10) is further designed to sort out the respective workpieces (12) into the collecting container (18) as a function of a provided quality information, wherein the collecting container (18) is designed to detect sorted-out workpieces (12') by a sensor device (0), and wherein the Al system (14) is additionally designed to assign the sorted-out workpiece (12') to the associated image when a respective workpiece (12') is detected by the sensor device (20) of the collecting container (18), to mark the associated image with a sorting-out mark, wherein the sorting-out mark is provided by the AI system (14) as a function of the classification, and to provide the image marked with the sorting-out mark as learning data.

## Revendications

1. Procédé de fourniture de données d'apprentissage pour un système d'IA (14), comprenant les étapes de :
- capture (10) d'images de pièces (12) par un dispositif de capture d'images (16) du système d'IA (14) ;
- classement (S12) des images capturées par le système d'IA (14) au moyen d'un critère de classification, dans lequel il est déterminé par l'intermédiaire de la classification des images capturées si les pièces respectives (12) sont sans défaut ou défectueuses ;
- fourniture (S14) d'une information de qualité de la pièce (12), dans lequel il est établi si la pièce respective (12) est sans défaut ou défectueuse en fonction de l'information de qualité, dans lequel les pièces défectueuses (12) sont triées dans un récipient collecteur (18) ;
- détection (S16) par un dispositif de capteur (20) du récipient collecteur (18) si une pièce (12) respective est triée dans le récipient collecteur (18), dans lequel la pièce triée (12') est associée à l'image correspondante par la détection des pièces triées (12') par le dispositif de capteur (20), et dans lequel l'image correspondante est marquée par un marquage de tri, dans lequel le marquage de tri est fourni en fonction de la classification par le système d'IA (14) ;
- fourniture (S18) des images marquées avec le marquage de tri comme données d'apprentissage pour le système d'IA (14).

2. Procédé selon la revendication 1, dans lequel des images de pièces (12), qui sont classifiées par le système d'IA (14) comme sans défaut et pour lesquelles la pièce correspondante est en outre détectée comme triée par le dispositif de capteur (20) du récipient collecteur (18), sont marquées comme défectueuses.

3. Procédé selon l'une quelconque des revendications précédentes, dans lequel des images de pièces (12), qui sont classifiées comme défectueuses par le système d'IA (14) et pour lesquelles la pièce correspondante n'est pas triée, sont marquées comme défectueuses.

4. Procédé selon la revendication 3, dans lequel des pièces non triées sont reconnues, en ce qu'il est attendu que le dispositif de capteur (20) du récipient collecteur (18) détecte la pièce (12) correspondante après une classification de l'image respective par le système d'IA (14) comme pièce défectueuse pendant un temps prédéfini, dans lequel l'image respective est marquée comme défectueuse si le dispositif de capteur (20) ne détecte aucune pièce dans le temps prédéterminé.

5. Procédé selon l'une des revendications précédentes, dans lequel le système d'IA (14) est instruit avec les données d'apprentissage fournies, en particulier avec les images marquées comme défectueuses.

6. Procédé selon l'une quelconque des revendications précédentes, dans lequel, lors de la détection des pièces (12') respectivement triées, un horodatage respectif est généré, au moyen duquel l'association de la pièce (12') triée à l'image correspondante est effectuée.

7. Procédé selon l'une quelconque des revendications précédentes, dans lequel le dispositif de capteur (20) du récipient collecteur (18) comprend une barrière lumineuse et/ou une balance et/ou une caméra.

8. Procédé selon l'une quelconque des revendications précédentes, dans lequel les pièces (12) sont des composants emboutis, en particulier pour une application de véhicule automobile, et un emboutissage des composants emboutis est effectué avant la capture des images par le dispositif de capture d'images (16).

9. Procédé selon l'une quelconque des revendications précédentes, dans lequel la présence de fissures est vérifiée sur la pièce (12) au moyen du critère de classification.

10. Système de traitement (10) de pièces (12) avec un système d'IA (14) et au moins un récipient collecteur (18), dans lequel le système de traitement (10) est conçu pour traiter les pièces (12) dans une étape de traitement, dans lequel le système d'IA (14) est conçu pour capturer des images des pièces (12) par un dispositif de capture d'images (16) et pour classifier les images capturées en fonction du fait que les pièces respectives (12) sont sans défaut ou défectueuses au moyen d'un critère de classification, dans lequel le système de traitement (10) est en outre conçu pour trier les pièces respectives (12) dans le récipient collecteur (18) en fonction d'une information de qualité fournie, dans lequel le récipient collecteur (18) est conçu pour détecter des pièces triées (12') par un dispositif de capteur (20), et dans lequel le système d'IA (14) est en outre conçu pour, lors de la détection d'une pièce respective (12') par le dispositif de capteur (20) du récipient collecteur (18), associer la pièce triée (12') à l'image correspondante, marquer l'image correspondante avec un marquage de tri, dans lequel le marquage de tri est fourni en fonction de la classification par le système d'IA (14), et fournir l'image marquée avec le marquage de tri comme données d'apprentissage.
